Europäisches Patentamt

European Patent Office

Office européen des brevets

(11) Publication number: 0 189 259
A2

# EUROPEAN PATENT APPLICATION

(21) Application number: 86300139.2

(51) Int. Cl.⁴: **F 16 D 55/14**

(22) Date of filing: 10.01.86

(30) Priority: 17.01.85 GB 8501221

(43) Date of publication of application: 30.07.86
Bulletin 86/31

(84) Designated Contracting States: DE FR GB IT

(71) Applicant: LUCAS INDUSTRIES public limited company,
Great King Street, Birmingham, B19 2XF West Midlands
(GB)

(72) Inventor: Price, Anthony George, 14 Meadow Lane
Croesyceiliog, Cwmbran Gwent NP44 2EY Wales (GB)
Inventor: Parry, David, 39 Marlborough Road Maes y
Rhiw, Cwmbran Gwent Wales (GB)

(74) Representative: Spall, Christopher John et al, BARKER,
BRETTELL & DUNCAN 138 Hagley Road, Edgbaston
Birmingham B16 9PW (GB)

(54) Improvements in self-energising disc brakes.

(57) In a disc brake of the spreading type an actuator (15) acts
to separate actuator lugs (16, 17) on the pressure plates (5, 6).
Each lug (16, 17) is integral with an adjacent pilot (41) on the
plate (5, 6) to form a common ear (45) which projects from the
outer edge of the plate in both radial and circumferential direc-
tions.

0189259

1

## IMPROVEMENTS IN SELF-ENERGISING DISC BRAKES

This invention relates to self-energising disc brakes of the kind in which rotatable friction discs provided with linings of friction material are adapted to be brought into engagement with spaced opposed radial surfaces in a housing by pressure plates located between the friction discs and centred by stationary pilot lugs, balls or rollers are located in co-operating oppositely inclined angularly spaced recesses in the adjacent faces of the pressure plates, and the application of the brake is initiated by moving the pressure plates angularly in opposite directions, the pressure plates then moving apart by a tendency for the balls or rollers to ride up ramps defined by the edges of the recesses, so that the pressure plates move into engagement with the friction discs which are urged into engagement with the radial surfaces, the pressure plates being carried round with the friction discs until one is arrested by the engagement of a lug on the plate with a drag-taking stop abutment in the housing, and the continued angular movement of the other pressure plate providing a servo action. Our invention is also concerned with the construction of a pressure plate for use in a disc brake of this kind.

Self-energising brakes of the kind set forth may be dry or they may be of the liquid cooled type, and suck brakes are commonly used in tractors and like vehicles and are hereinafter called brakes of the kind set forth.

In known self-energising disc brakes of the kind set forth the pressure plates are moved angularly in opposite directions to initiate application of the brake by brake-applying means applying a brake-applying force between a pair of radial actuator lugs on the plate. The lugs may be pivotally connected to the outer ends of a pair of toggle links of which the inner ends are coupled to a pull-rod which is adapted to be withdrawn radially from the brake to draw the toggle links and the lugs towards each other.

In another known construction an hydraulic actuator acts between the actuator lugs in order to separate them. In such known constructions the actuator lugs project outwardly from the edges of the plates of which regions at the edges of the plates are machined locally to provide pilots for co-operation with the stationary pilot lugs on the housing.

According to our invention, in a self-energising disc brake of the kind set forth each plate comprises a member of annular outline provided at at least three angularly spaced locations with pilots which project radially from its outer edge for co-operation with the stationary pilot lugs on the housing, and an actuator lug is disposed adjacent to one of the pilots so that when the two pressure plates are superimposed in the brake the actuator lugs are so arranged that a brake-applying force applied to the actuator lugs moves the plates angularly in opposite directions, and the actuator lug and the adjacent pilot on at least one of the plates are formed by a common ear which is integral with and projects from the outer edge of the plate in both radial and circumferential directions.

Such ears increase the strength of the actuator lugs for a given material. This means that for a given pressure plate it is not necessary for us to construct the pressure plates from a high strength iron, which is relatively soft, thereby avoiding the consequent disadvantages stemming from the use of such a soft material, namely a reduction in the wear life of the braking surfaces defined by the outer faces of the pressure plates, and the recesses in which the balls or rollers are located.

Preferably the actuator lugs and the adjacent pilots on each plate are formed by a common ear so that the brake is provided with a pair of pressure plates of similar construction.

The actuator lugs may be separated by a double-ended hydraulic actuator which acts between abutment faces at adjacent ends of the actuator lugs.

Preferably the diameter of the pilots is increased substantially so that the pilots all project from outer edge of the plate by substantial distance.

One embodiment of our invention is illustrated in the accompanying drawings in which:-

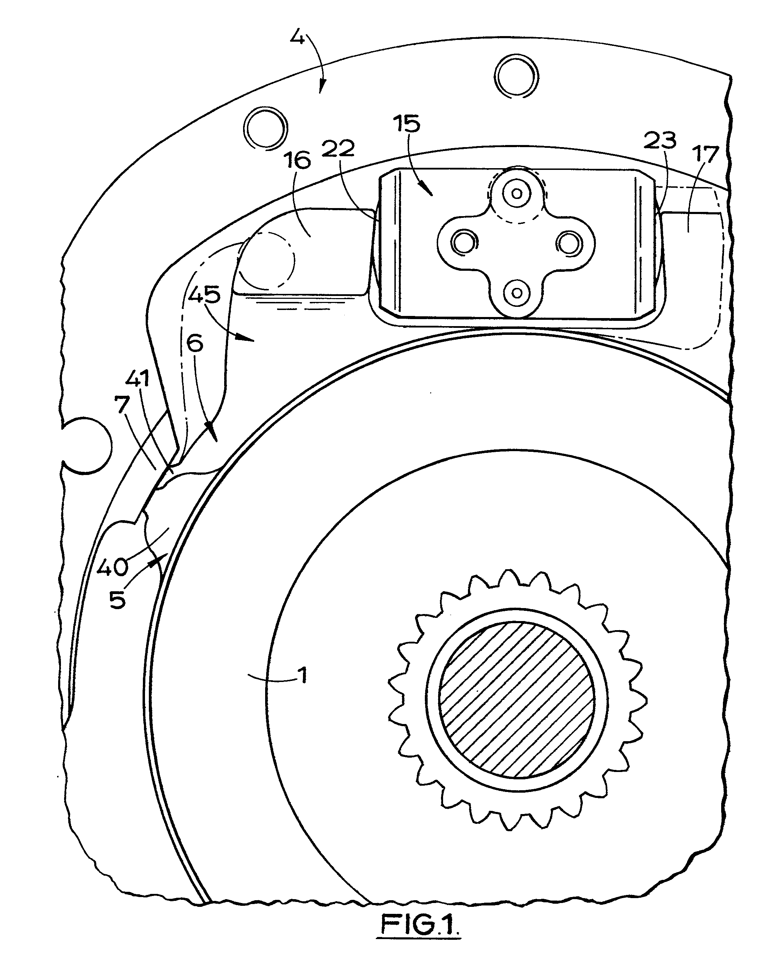

Figure 1 is an end view of a portion of a spreading disc brake;   and

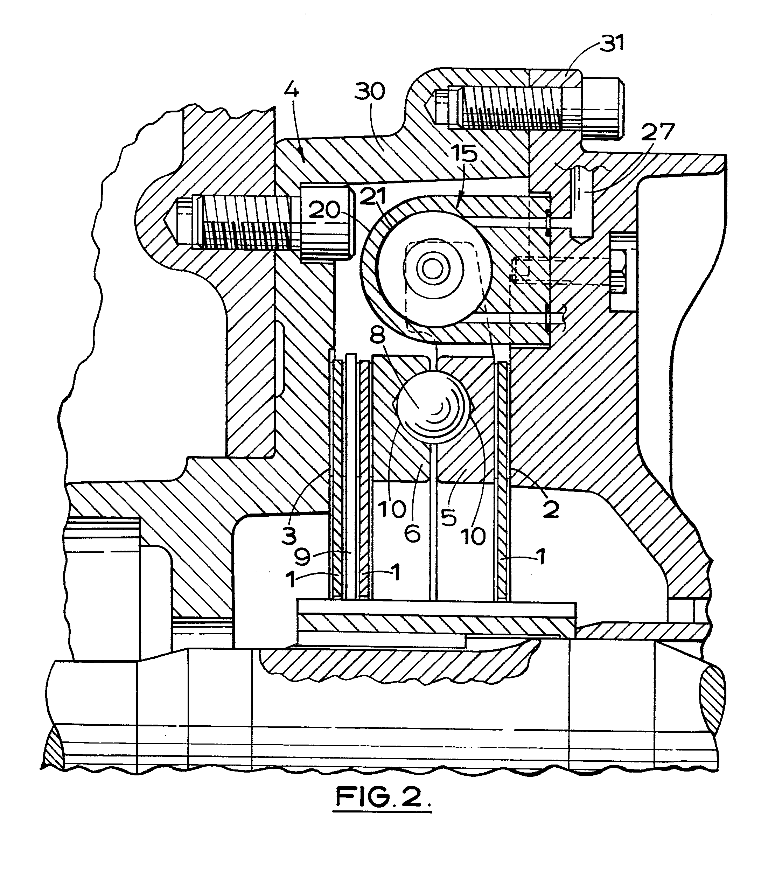

Figure 2 is a transverse section through the brake.

The brake illustrated in the drawings is of a spreading type in which three rotatable friction discs 1 slidably keyed for axial movement on a rotatable shaft are provided on opposite sides with linings of friction material adapted to be brought into engagement with spaced opposed radial surfaces 2, 3 in a housing 4 by an actuator assembly constituted by a pair of pressure plates 5, 6 located between an

4

adjacent pair of the discs 1 and centred by three angularly spaced stationary pilot lugs of which only one is shown at 7. The pilot lugs 7 extend circumferentially for substantially arcuate distances. Balls 8 are located in co-operating oppositely inclined recesses 10 in the adjacent faces of the pressure plates 5, 6. An intermediate plate 9 is disposed between the friction discs 1 of the pair disposed between the plate 6 and the surface 3.

The application of the brake is initiated by moving the pressure plates 5, 6 angularly in opposite directions which causes the pressure plates 5, 6 to move axially relatively away from each other due to the tendency for the balls 8 to ride up ramps defined by the end faces of the recesses 10. This urges the friction discs 1 into engagement with the faces 2 and 3 in the housing 4. The pressure plates 5, 6 are then carried round with the discs until one is arrested by the engagement of a lug on a respective plate with a drag-taking abutment, as will hereinafter be described, whereafter continued angular movement of the other plate, hereinafter referred to as the "servo plate" provides a servo action.

The brake is applied mechanically for parking or in an emergency by a pull-rod (not shown) which extends through a radial opening in the housing 4 and is coupled to the outer ends of a pair of toggle links of which the inner ends are pivotally connected to respective pressure plates.

For normal service braking the brake is applied hydraulically by an hydraulic actuator 15 which acts between actuator lugs 17 and 16 on the respective pressure plates 5, 6. The lugs 17 and 16 are displaced angularly from the toggle links.

The actuator 15 comprises a cylinder 20 having an open-ended longitudinal through-bore 21 in which work a pair of oppositely acting pistons 22, 23 for engagement with the lugs 16 and 17. Each piston 22, 23 may work through a seal adjacent to the adjacent outer end of the cylinder 20 and carry a seal adjacent to its inner end. A pressure space defined in bore 21 between adjacent inner ends of the pistons 22 and 23 is connected to a master cylinder through a passage 27.

The housing 4 comprises a casing 30 of bell-shaped outline, and an end plate 31 closing the open end of the casing 30. The braking surfaces 2 and 3 are defined by the inner faces of the casing 30 and of the plate 31, respectively.

Each pressure plate 5, 6 is provided with three angularly spaced pilots, of which only one pilot 40, 41 on each respective plate 5, 6 is shown. The three pilots project by substantial distances from the outer edges of the plates 5 and 6.

The two pilots 40 and 41 extend circumferentially for distances which are relatively small in comparison with the circumferential length of the pilot lug 7 with which they co-operate.

The pilot 41 and the lug 16 are combined together to comprise a common ear 45 which is integral with the plate 6 and of which the minimum radial dimension is only slightly less than the distance by which the pilot 41 projects from the outer edge of the plate 6.

The ear 45 enhances the strength of the lug 16 for a given material.

The two plates 5 and 6 are therefore similar in construction with the pilot 41 of greater length being integral with the actuator lug 16, and the pilot 40 of shorter length being spaced from the pilot 41 by substantially 120°.

When the brake is applied, the "servo plate" tends to swing towards the pilot lug 7 with which the shorter pilot 40 co-operates. Arranging for the length of the pilot 40 to be short in comparison with the length of the pilot lug 7 reduces the frictional resistance to continued rotation of the "servo plate" to produce the servo on self-energising action.

The torque taking abutment which arrests the angular movement of one of the pressure plates 5 and 6 is spaced angularly from the other pilot lugs 7 with which the pilots 40 and 41 co-operate, and is located diametrically opposite the hydraulic actuator 15. This pilot lug, or torque pin, may be positioned at a radius of the brake which is smaller than the radius of the two other pilot lugs. The said two other pilot lugs 7 are located at 2 o'clock and 10 o'clock with respect to the torque taking abutment.

CLAIMS

1. A self-energising disc brake in which rotatable friction discs (1) provided with linings of friction material are adapted to be brought into engagement with spaced opposed radial surfaces (2,3) in a housing (4) by pressure plates (5,6) located between the friction discs and centred by stationary pilot lugs (7), balls or rollers (8) are located in co-operating oppositely inclined angularly spaced recesses (10) in the adjacent faces of the pressure plates, and the application of the brake is initiated by moving the pressure plates angularly in opposite directions, the pressure plates then moving apart by a tendency for the balls or rollers to ride up ramps defined by the edges of the recesses, so that the pressure plates move into engagement with the friction discs which are urged into engagement with the radial surfaces, the pressure plates being carried round with the friction discs until one is arrested by the engagement of a lug on the plate with a drag-taking stop abutment in the housing, and the continued angular movement of the other pressure plate providing a servo action and in which each plate (5,6) comprises a member of annular outline provided at at least three angularly spaced locations with pilots (40,41) which project radially from its outer edge for co-operation with the stationary pilot lugs on the housing, and an actuator lug (16,17) is disposed adjacent to one of the pilots so that when the two pressure plates are superimposed in the brake the actuator lugs are so arranged that a brake-applying force applied to the actuator lugs moves the plates angularly in opposite directions, characterised in that the actuator lug (16,17) and the adjacent pilot (40,41) on at least one of the plates are formed by a common ear (45) which is integral with and projects from the

8

outer edge of the plate in both radial and circumferential directions.

2. A disc brake according to Claim 1, characterised in that the actuator lug (16,17) and the adjacent pilot (40,41) on each pressure plate are formed by a common ear.

3. A disc brake according to Claim 1, characterised in that three pilots project by substantial distances from the said outer edge.

4. A disc brake according to any preceding claim, characterised in that the pilot (7) of the ear (45) extends circumferentially for a distance which is relatively small in comparison with the circumferential length of the pilot lug (7) with which it co-operates.

5. A disc brake according to any preceding claim, characterised in that the minimum radial dimension of the ear (16,17) is only slightly less than the distance by which the pilot of the ear projects from the outer edge of the plate.

6. A disc brake as claimed in any preceding claim characterised in that the two plates (5,6) are similar in construction and are arranged in the housing (4) with the two actuator lugs (16,17) disposed in a spaced apart, opposed, relationship, and an hydraulic piston and cylinder assembly (15) acts between abutment faces at adjacent ends of the lugs.

7. A pressure plate for a self-energising disc brake in which the plate (5,6) comprises a member of annular outline provided at at least three angularly spaced locations with pilots (40,41) which project radially from its outer edge for co-operation with stationary pilot lugs (7) on a housing (4) of a brake, and an actuator lug (16,17) is disposed adjacent to one of the pilots to receive a brake-applying force, characterised in that the actuator lug (16,17) and the adjacent pilot (40,41) are formed by a common ear (45) which is integral with and projects from the outer edge of the plate in both radial and circumferential directions.

8. An actuator assembly for a self-energising disc brake comprising a pair of pressure plates (5,6) provided in adjacent faces with angularly spaced recesses (10) in pairs of which balls or rollers (8) are located, and each plate comprises a member of annular outline provided at at least three angularly spaced locations with pilots (40,41) which project radially from its outer edge for co-operation with stationary pilot lugs (7) on a housing (4) of the brake, and an actuator lug (16,17) is disposed adjacent to one of the pilots to receive a brake-applying force, characterised in that the actuator lug (16,17) and the adjacent pilot (40,41) being formed by a common ear (45) which is integral with and projects from the outer edge of the plate in both radial and circumferential directions, and the plates are disposed in a superimposed relationship with the two actuator lugs (16,17) disposed in a spaced apart, opposed, relationship.

FIG.1.

FIG. 2.